# EUROPEAN PATENT APPLICATION

(11) **EP 4 545 317 A1**
(43) Date of publication of application: **30.04.2025**
(21) Application number: 24207731.1
(22) Date of filing: 21.10.2024
(51) Int. Cl.: B60G 3/06, B60G 3/20, B60G 9/00, B60G 11/04, B60G 11/08

(54) **ELECTRICALLY DRIVEN VEHICLE COMPRISING AN IMPROVED SUSPENSION SYSTEM**

(30) Priority: 23.10.2023 IT 202300022104
(71) Applicant: IVECO S.P.A., 10156 Torino (IT)
(72) Inventor: PEREIRA DE LEMOS, Josè Francivaldo, 10156 Torino (IT)
(74) Representative: Studio Torta S.p.A.

(57) **Abstract**

Commercial or heavy vehicle comprising a chassis (2) comprising a pair of longitudinal elements (2', 2") and a plurality of connecting elements (2‴), the longitudinal elements (2', 2") extending along a longitudinal axis (A) of said vehicle (1) and the connecting elements (2‴) connecting the longitudinal elements (2', 2") along a direction of a transverse axis (B) perpendicular to the longitudinal axis (A), vehicle (1) comprising a suspension system (10, 30) configured to connect a steering motor wheel (6) of the vehicle to chassis (2) externally with respect to a space (V) comprised by longitudinal elements (2', 2"), motor wheel (6) comprising a steering knuckle (50) and an electric machine (M) carried by steering knuckle (50) so as to be operatively connected to a wheel hub (53) of motor wheel (6),
the suspension system (10, 30) supporting the steering knuckle (50) so that an axis of rotation (O) of the motor wheel (6) is placed above along a vertical axis (C) perpendicular to the longitudinal and transverse axes (A, B) of a connecting element (2‴) connecting longitudinal element (2', 2") at motor wheel (6).

## Description

### CROSS-REFERENCE TO RELATED APPLICATIONS

This patent application claims priority from Italian patent application no. 102023000022104 filed on October 23, 2023, the entire disclosure of which is incorporated herein by reference.

### TECHNICAL SECTOR

The present invention relates to a vehicle suspension system.

The present invention has preferred, though not exclusive, application in suspension systems for electrically driven vehicles. This application will be referred to below by way of example.

### BACKGROUND OF THE INVENTION

As is well known, there is a growing need to reduce pollutant emissions due to internal combustion engines used to operate vehicles, in particular to enable their traction.

This need is all the greater for light commercial vehicles, (LCVs) or heavy duty vehicles such as trucks.

To this end, there are solutions known as e-axles, i.e. electrically driven axles, in which the axle itself carries one or more electric machines configured to exchange torque with the axle shafts, and thus with the wheels, to supply or generate power depending on the vehicle's condition of use.

Alternatively, motor wheel solutions are known, where the wheel hub itself is directly connected to an electric machine without the interposition of axle shafts between a front or rear wheel pair.

Such electric traction systems require battery packs configured to allow them to function as a motor or electric generator. However, due to the size of the battery packs, especially for commercial or heavy-duty vehicles, it is necessary to reconfigure vehicles to accommodate them.

Known suspension systems place severe limitations on the housing of such battery packs, severely constraining the shape of the chassis and occupying considerable space within the longitudinal elements themselves.

There is therefore a need to improve known suspension systems so that they are more compact and allow for chassis that can accommodate battery packs.

The aim of the present invention is to fulfil the above-described needs in an optimised and cost-effective manner.

### SUMMARY OF THE INVENTION

The above aim is achieved by a vehicle as claimed in the appended claims forming an integral part of the present description.

### BRIEF DESCRIPTION OF THE DRAWINGS

An embodiment is described below for a better understanding of the present invention, provided by way of non-limiting example with reference to the accompanying drawings, wherein:
- Figure 1 is a perspective view of an electrically driven vehicle comprising a suspension system according to a first embodiment of the invention;
- Figure 2 is a cross-sectional view of a portion of the vehicle in Figure 1;
- Figure 3 is a perspective view of a portion of the vehicle in Figure 1;
- Figure 4 is a perspective view of an electrically driven vehicle comprising a suspension system according to a second embodiment of the invention;
- Figure 5 is a cross-sectional view of a portion of the vehicle in Figure 4;
- Figure 6 is a perspective view of a portion of the vehicle in Figure 4;
- Figure 7 is a sectional view of a portion of an electric drive system of the vehicle according to the invention;
- Figure 8 is a perspective view from below of a portion of the vehicle according to the invention;
- Figure 9 is a longitudinal sectional view of the portion in Figure 8.

### DETAILED DESCRIPTION OF THE INVENTION

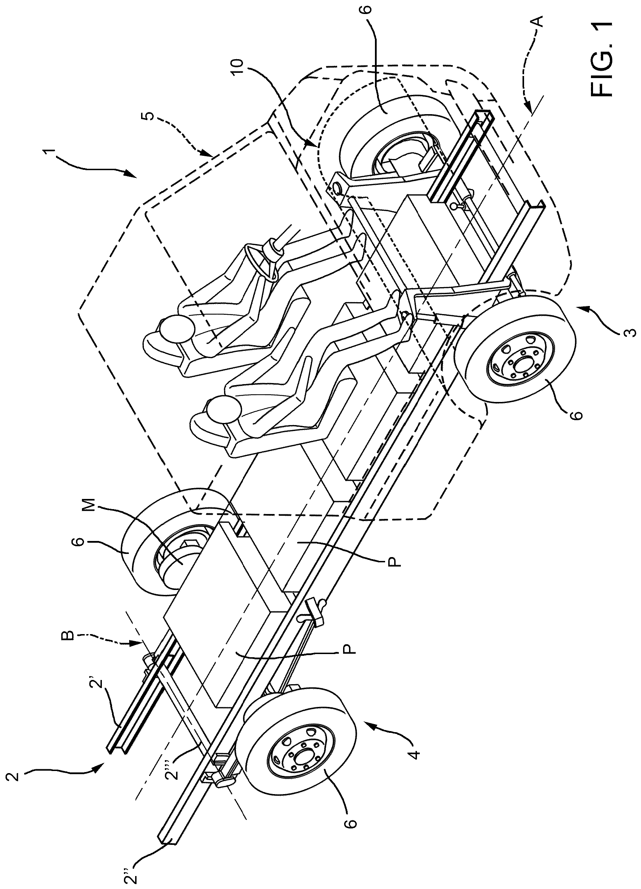

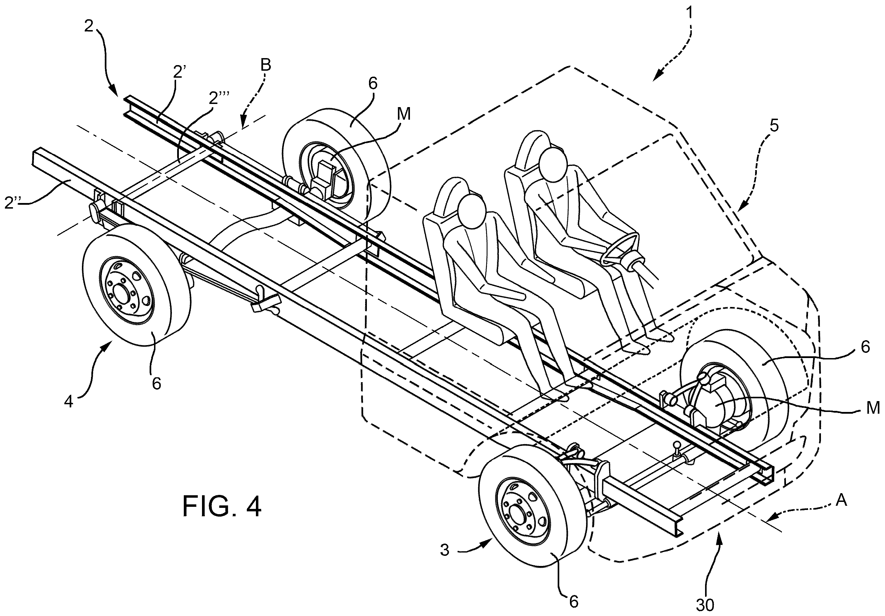

Figures 1 and 4 schematically illustrate an electrically driven vehicle 1 extending along a longitudinal axis A and provided with a chassis 2 having a pair of longitudinal elements 2', 2" connected to each other by transverse elements 2‴ such as cross-members arranged transversely, i.e. along a transverse axis B perpendicular to longitudinal axis A.

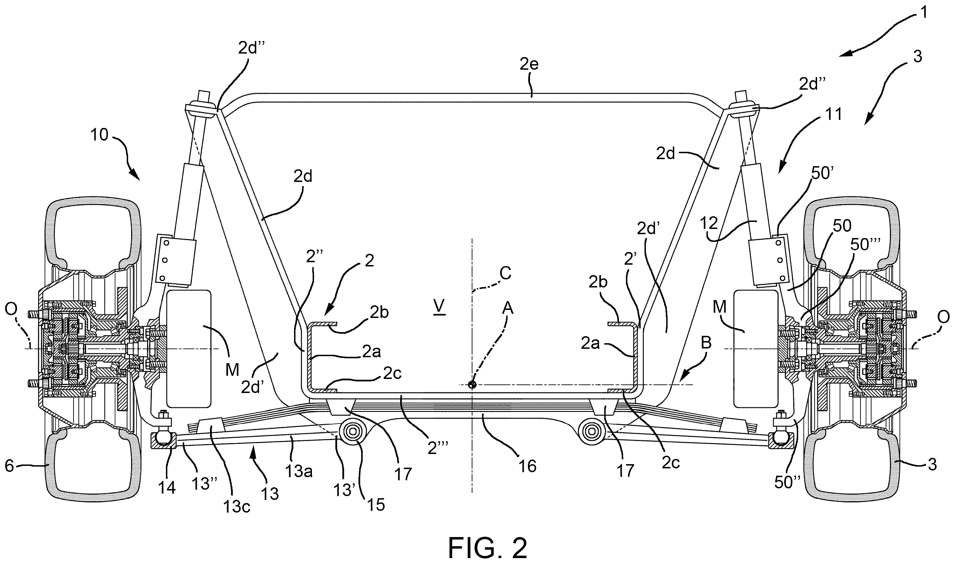

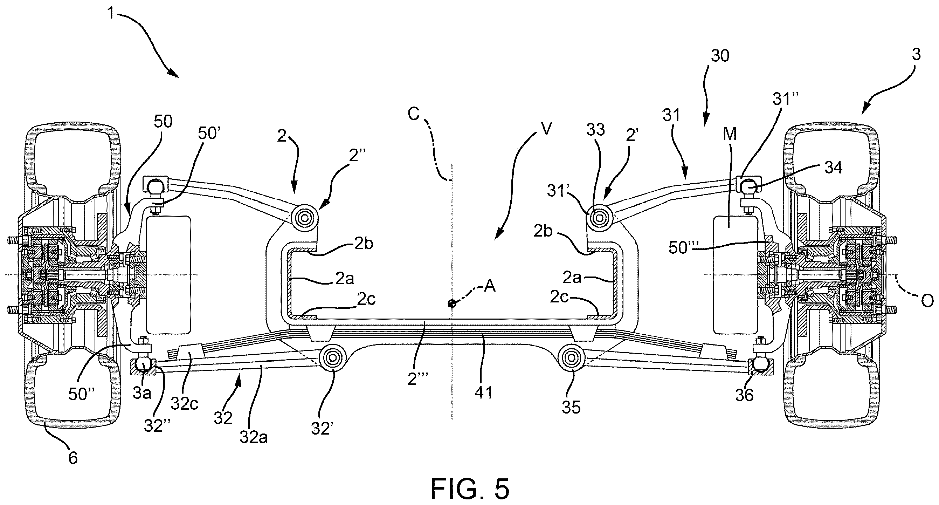

Advantageously, as can best be seen in Figures 2 and 5, the longitudinal elements have a C-shaped cross-section and thus comprise a vertical wall 2a extending along a vertical axis C of the vehicle perpendicular to axes A, B and a pair of walls 2b, 2c, upper and lower, extending cantilevered, in particular perpendicularly, from the ends of vertical wall 2a.

In detail, walls 2b, 2c of longitudinal elements 2', 2" each extend towards that of the opposite longitudinal element.

Longitudinal elements 2', 2" delimit between them a space V which is transversely delimited by respective vertical walls 2a, inferiorly and vertically open, with the exception of the points where transverse elements 2‴ are provided.

Vehicle 1 comprises at least one pair of front wheels 3 and at least one pair of rear wheels 4 each equipped with wheels 6.

In particular, vehicle 1, being electrically driven, comprises at least one electric machine M adapted to exchange torque with wheels 6.

Specifically, wheels 6 are motor wheels, i.e. each is equipped with a respective electric machine M configured to act as an electric motor, i.e. to provide torque to wheel 6 or receive torque from it to generate electricity.

Advantageously, vehicle 1 carries a plurality of battery packs P advantageously carried by chassis 2 and preferably in the space V between longitudinal elements 2', 2".

Battery packs P are configured to store or release electrical energy to at least one electric machine M, in the embodiment described therefore to the motor wheels.

Advantageously, a transverse element 2‴ connecting longitudinal elements 2', 2" in proximity to front wheels 3 is shaped like a plate, in the embodiment described substantially rectangular shaped.

This plate-like transverse element 2‴ is configured to support one of the aforementioned battery packs P which may otherwise be housed above remaining transverse elements 2‴ or longitudinally interposed between them and fixed to walls 2a, 2b, 2c of longitudinal elements 2'.

Advantageously, this plate-like transverse element 2‴ is placed at the same height as lower wall 2c.

Above front wheels 3, vehicle 1 usually defines a cab 5 which can be carried by chassis 2 at different distances from the ground.

Advantageously, front wheels 3 are carried by chassis 2 via a corresponding suspension system 10, 30.

Suspension system 10, 30 according to the present invention allows front wheels 6 to be connected in a suspended manner to longitudinal elements 6 in such a way that an axis of rotation O of wheels 6 is placed vertically above transverse element 2‴ placed in proximity to the wheels, i.e., it is placed above lower wall 2c of longitudinal elements 2' , 2" and in detail placed externally with respect to space V comprised by them.

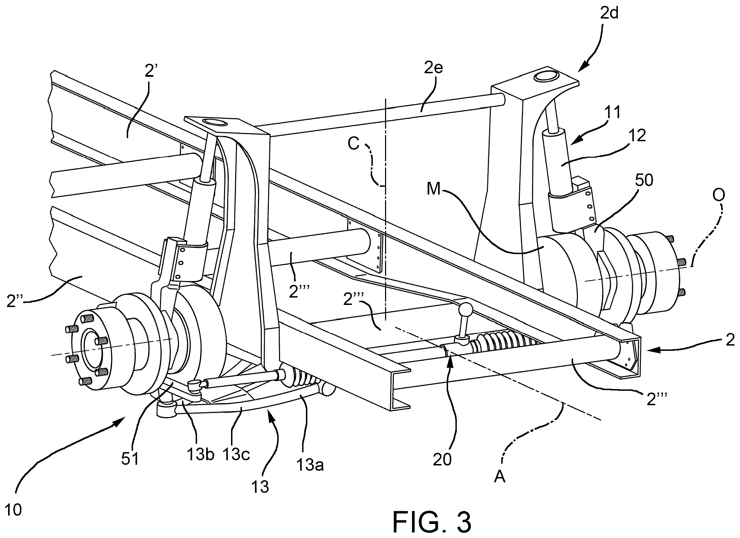

According to a first embodiment of the invention, shown in Figures 1 to 3, suspension system 10 for front wheels 6 is of the MacPherson type.

In detail, suspension system 10 comprises, for each front wheel 6, suspension means 11 configured to be operatively interposed between chassis 2 and a steering knuckle 50 of wheel 6.

Steering knuckle 50, which will be described in detail below, essentially comprises an upper portion 50', a lower portion 50" extending from a main portion 50‴ along vertical axis C.

In detail, suspension means 11 are connected to upper portion 50' and essentially comprise a hydraulic cylinder 12.

Advantageously, the casing of hydraulic cylinder 12 is attached at one end to upper portion 50' while the rod is attached at one end to chassis 2.

In detail, chassis 2 defines, at suspension system 10 and plate-like intermediate element 2‴, a pair of brackets 2d extending vertically above longitudinal elements 2', 2" from them, i.e. on the opposite side to the ground, and externally to space V.

In detail, brackets 2d extend in a flared manner, i.e., they comprise a lower portion 2d' connected to the longitudinal elements and an upper portion 2d" that is placed spaced apart from lower portion 2d' along the direction of transverse axis B. Consequently, they define an external "V" shape with respect to longitudinal elements 2', 2".

Advantageously, upper portions 2d" are connected to each other by a bar 2e. Preferably this bar 2e is rigid and has a "bridge" shape with concavity towards space V, i.e. towards longitudinal elements 2', 2".

Cab 5 can be attached, at least in part, to upper portions 2d" and to bar 2e, depending on design requirements.

Advantageously, suspension means 12, i.e. the hydraulic cylinder rod mentioned above, are connected to upper portion 2d'' of each bracket 2d.

In detail, suspension system 10 comprises, for each front wheel 6, a connecting element 13, operatively interposed between lower portion 50" of steering knuckle 50 and chassis 2.

In detail, this connecting element 13 is operatively connected to a protuberance 2d‴ extending from brackets 2d below wall 2c of longitudinal elements 2', 2".

Advantageously, this connecting element 13 is fork-shaped comprising a first and a second arm 13a, 13b each comprising an inner end 13' and an outer end 13".

Outer ends 13" are joined to lower portion 50" of steering knuckle 50, while inner ends 13' are connected separately and spaced along longitudinal axis A to chassis 2. Consequently, connecting element 13 is a V-shaped fork that opens away from steering knuckle 50.

In detail, outer ends 13' are connected to the steering knuckle via a first movable connection 14, advantageously a ball joint, and inner ends 13' are connected to chassis 2 via a second movable connection 15, advantageously a hinge joint allowing rotation about an axis parallel to longitudinal axis A.

Advantageously, suspension system 10 further comprises an elastic element 16 connecting elements 13 of each wheel 6.

In detail, this elastic element 16 is placed below chassis 2 and extends along the direction of transverse axis B. Preferably, elastic element 16 made as a leaf spring.

In detail, such a leaf spring is connected at its ends to connecting elements 13, e.g. a pocket 13c defining a seat for the ends of such a leaf spring and connecting arms 13a, 13b of each connecting element 13 to one another. Further, this leaf spring is connected at its intermediate ends by seats 17 rigidly carried by chassis 2, e.g. extending below plate-like intermediate element 2‴.

Advantageously, the connections to pocket 13c or seats 17 can be rigid or movable depending on the design requirements.

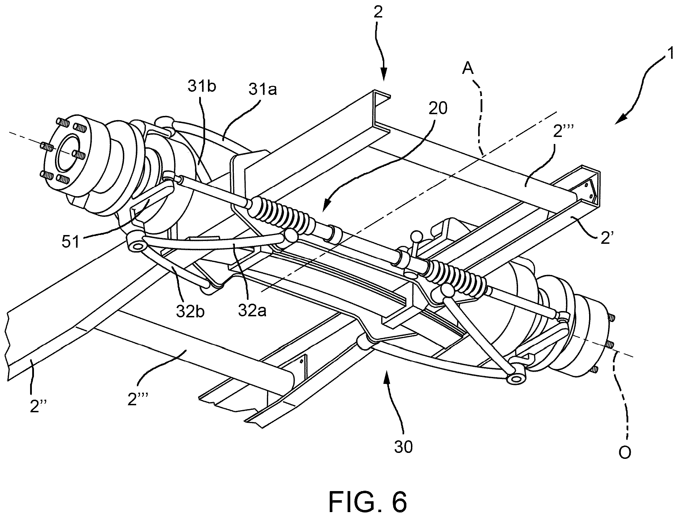

According to a second embodiment of the invention, illustrated in Figures 4 to 6, suspension system 30 for front wheels 6 is of the quadrilateral type.

It can be seen that, even in this embodiment, steering knuckle 50 essentially comprises an upper portion 50', a lower portion 50" extending from a main portion 50‴ along vertical axis C.

Suspension system 30 comprises an upper connecting element 31, operatively interposed between upper portion 50' of steering knuckle 50 and chassis 2, and a lower connecting element 32, operatively interposed between lower portion 50" of steering knuckle 50 and chassis 2.

In detail, these connecting elements 31, 32 are operatively connected to respective flanges 2f', 2f" extending from upper wall 2b and lower wall 2c of longitudinal elements 2', 2". Advantageously, these flanges 2f', 2f" are part of a single flange 2f surrounding space V, longitudinal elements 2', 2" and intermediate element 2" externally.

Advantageously, both connecting elements 31, 31 are fork-shaped comprising a first and second arm 31a, 31b, 32a, 32b each comprising an inner end 31', 32' and an outer end 31", 32".

Outer ends 31", 32" are joined to lower portion 50" of steering knuckle 50 while inner ends 31', 32' are connected separately and spaced along longitudinal axis A to chassis 2. Consequently, connecting element 13 is a V-shaped fork that opens away from steering knuckle 50.

In detail, outer ends 31', 32' are connected to the steering knuckle via a first movable connection 34, 36 advantageously a ball joint, and inner ends 31", 32" are connected to chassis 2 via a second movable connection 33, 35, advantageously a hinge joint allowing rotation about an axis parallel to longitudinal axis A.

Advantageously, suspension system 10 further comprises, as in the first embodiment, an elastic element 41 connecting lower connecting elements 32 of each wheel 6.

In detail, this elastic element 41 is placed below chassis 2 and extends along the direction of transverse axis B. Preferably, the elastic element is made as a leaf spring.

In detail, such a leaf spring is connected at its ends to connecting elements 32, e.g. a pocket 32c defining a seat for the ends of such a leaf spring and connecting arms 32a, 32b of each connecting element 32 to one another. Further, this leaf spring is connected at its intermediate ends by seats 17 rigidly carried by chassis 2, e.g. extending below plate-like intermediate element 2‴.

Advantageously, the connections to pocket 32c or seats 17 can be rigid or movable depending on the design requirements.

In both embodiments described above, vehicle 1 also comprises a steering system 20 configured to allow steering of front wheels 6. Such a steering system 20 may be shown of any type and is configured to provide a pull or push force to an appendage 51 extending along longitudinal axis A of vehicle 1 from central portion 50‴ of steering knuckle 50.

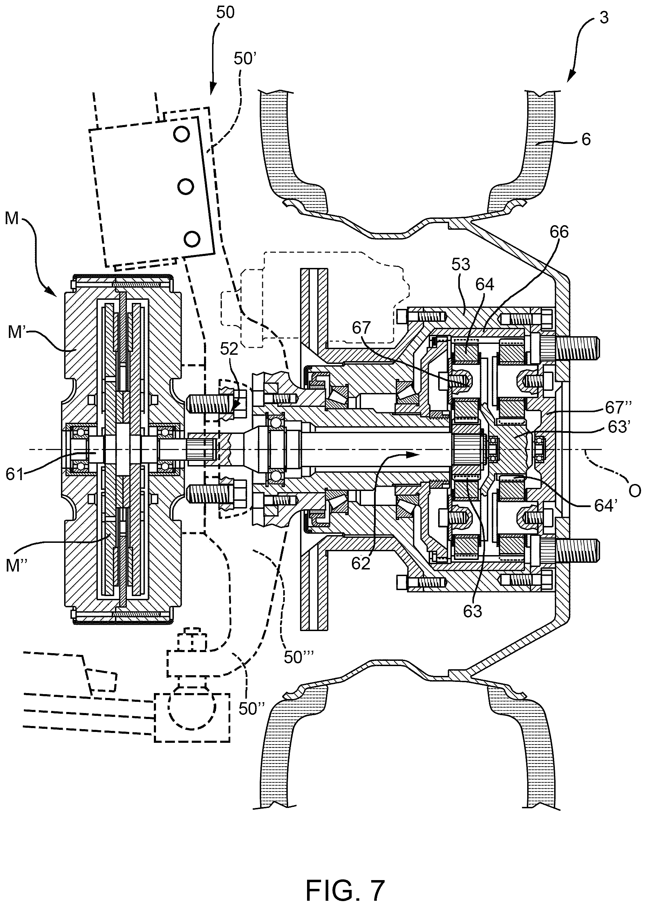

As best illustrated in Figure 7, electrical machine M comprises a stator M' carried rigidly by steering knuckle 50, in particular by central portion 50‴, and a rotor M" carried rotatably by stator M" and configured to interact electrically with it to provide torque or generate electricity.

Stator M" is rigidly carried by an operating shaft 61, coaxial to axis O, and steering knuckle 50 is provided with an opening 52 to allow operating shaft 61 to pass through.

Operating shaft 61 is operatively connected to a wheel hub 53 rotatably free in relation to steering knuckle 50 and supporting wheel hub 53 of wheel 6 via a transmission system 62.

Advantageously, wheel hub 53 is shaped to define a space isolated from the outside environment and housing transmission 62.

Advantageously, transmission system 62 is of the epicyclic gear train/planetary gear type and more specifically comprises a pair of epicyclic gears/ planetary gears in series with each other, in a so-called "compound" configuration.

In detail, transmission system 62 comprises a first epicyclic gear provided with a solar gear 63 rigidly carried by operating shaft 61, a crown 66 and a plurality of satellites 64 meshing between solar gear 63 and crown 66. Satellites 64 are carried by a train carrier 67.

In the embodiment described, carrier 67 is rigidly connected to a second solar gear 63' rotatable with respect to first solar gear 63 and to wheel hub 53 and meshing with a plurality of second satellites 64' in turn meshing with the previously mentioned crown 66, thus resulting in common with the plurality of satellites 64.

The plurality of second satellites 64' is carried by a second carrier 67 which is rigidly connected to wheel hub 53.

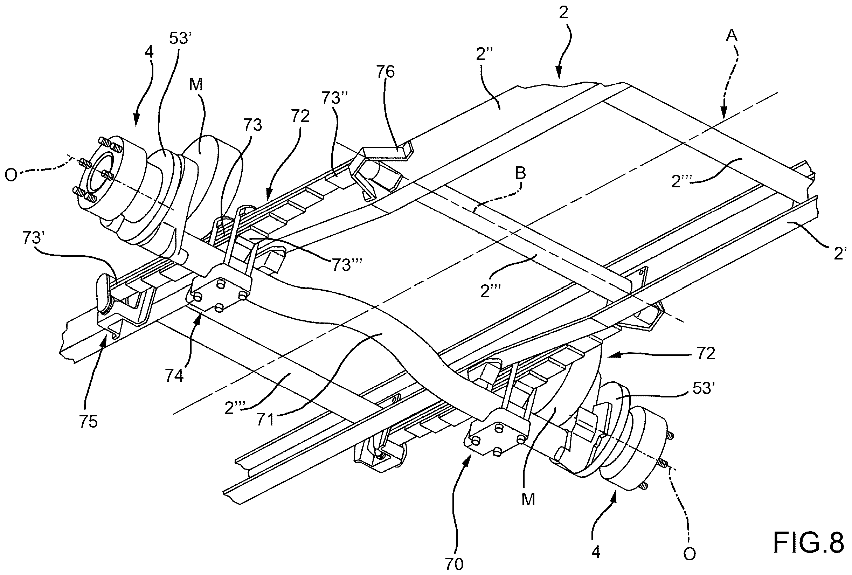

In both embodiments, vehicle 1 is provided with a suspension system 70 for rear axle 4, shown in Figure 8.

In detail, suspension system 70 comprises a bar 71 rigidly connecting wheel hubs 53 of respective wheels 6.

Advantageously, bar 71 can be shaped according to design requirements; in the described embodiment it has a curvature in a central portion while being free at the ends and constant circular cross-section along the entire extension along axis B.

Bar 71 is carried movable by chassis 2 by means of an elastic device 72 operatively interposed between each end of bar 71 and a respective longitudinal element 2', 2". Consequently, only one elastic device 72 will be described below.

Advantageously, elastic device 72 comprises a leaf spring 73 with central portion 73" and a pair of ends 73', 73" at the rear and front, respectively.

In detail, central portion 73" is rigidly connected to bar 71 via a connecting assembly 64, itself of a known type and not described further for the sake of brevity.

Ends 73', 73" of leaf spring 73 are connected to longitudinal element 2". In the illustrated embodiment, rear end 73' is connected via a movable connection 75 whereas front end 73" is connected via a rigid connection 76.

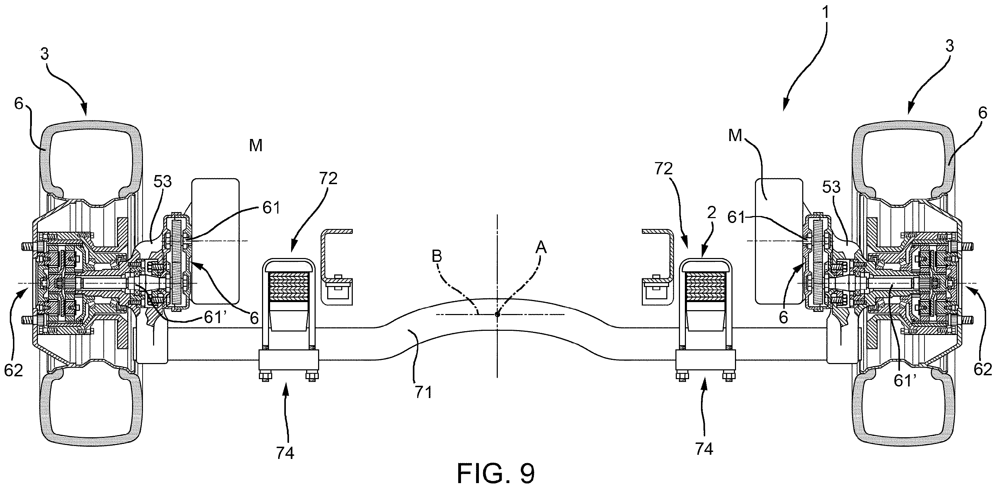

As can best be seen in Figure 9, operating shaft 61 of the electrical machine in such a case is connected to an intermediate shaft 61, located vertically below the operating shaft, by means of a transfer system G, e.g. a gear, configured to convey torque from operating shaft 61 to operating shaft 61'.

Operating shaft 61 is operatively connected to the rim of wheel 6 via a reduction system 62, for example, as described above.

The operation of the embodiment of the suspension system, axle and vehicle according to the above-described invention is as follows.

In both embodiments, in a first operating condition electric machine M acts as an electric motor and drives operating shaft 61 in rotation, which supplies torque via transmission 62, i.e. the planetary gears described, supplying torque to hub 53 and thus moving the vehicle.

In a second operating condition, electric machine M acts as an electric generator and the electric machine is driven by operating shaft 61 which is moved by hub 53 via transmission 62.

In both of the above-mentioned operating conditions, suspension systems 10, 30 make it possible to compensate for any vertical, longitudinal and transverse thrusts and torsional moments thanks to their components.

In parallel, the same action is carried out by rear suspension system 70.

If it is necessary to steer, it is possible to act on the steering knuckle via steering system 20 on appendage 51, thus allowing wheel 6 to be steered.

From the above, the advantages of a vehicle according to the invention are clear.

Thanks to the proposed suspension system, it is possible to create a chassis for an electrically driven vehicle that allows for the housing of vehicle batteries without at the same time reducing the suspension capabilities with respect to known systems.

In particular, it is possible to provide a chassis with a lowered support surface, which allows the housing of vehicle batteries.

Again, sufficient space can be provided to for providing motor wheels carried directly by the steering knuckle.

Thus, it is possible to reduce the footprint with respect to known suspension systems, their number of elements, and consequently reduce assembly time and manufacturing costs.

Due to the fact that electric machines M of the rear axle are raised relative to the axle shaft, it is possible to allow the movement of the axle shaft without the electric machine touching the chassis or the suspension system.

Finally, it is clear that modifications and variations can be made to the vehicle according to the present invention which, however, do not depart from the scope of protection defined by the claims.

The chassis may have a different shape from that described, both in the cross section of the longitudinal elements and in the appendages attached to them.

Again, the suspension system could comprise different or equivalent elements from those described, such as forks of a different shape or a different number of them or springs instead of the illustrated cylinder or different hinges/ball joints from those described.

Again, the leaf springs described may have a different shape or number of elements or related attachment with respect to the one shown.

## Claims

1. Commercial or heavy vehicle comprising a chassis (2) comprising a pair of longitudinal elements (2', 2") and a plurality of connecting elements (2‴), said longitudinal elements (2', 2") extending along a longitudinal axis (A) of said vehicle (1) and said connecting elements (2‴) connecting said longitudinal element (2', 2") along a direction of a transverse axis (B) perpendicular to said longitudinal axis (A), said vehicle (1) comprising a suspension system (10, 30) configured to connect a steering motor wheel (6) of said vehicle to said chassis (2) externally with respect to a space (V) comprised by said longitudinal elements (2', 2"), said motor wheel (6) comprising a steering knuckle (50) and an electric machine (M) carried by said steering knuckle (50) so as to be operationally connected to a wheel hub (53) of said motor wheel (6),
said suspension system (10, 30) supporting said steering knuckle (50) so that an axis of rotation (O) of said motor wheel (6) is placed above along a vertical axis (C) perpendicular to said longitudinal and transverse axes (A, B) of a connecting element (2‴) connecting said longitudinal element (2', 2") at said motor wheel (6).
wherein said suspension system (10, 30) comprises a first connection element (13, 32) comprising a first and a second arm (13a, 13b, 32a, 32b), said first and second arms (13a, 13b, 32a, 32b) being connected to respective first and second ends (13', 32', 13", 32") respectively to said chassis (2) and to said steering knuckle (50),
wherein said suspension system (10, 30) further comprises an elastic element (16; 41) operatively connecting said first connecting elements (13, 32), said elastic element (16, 41) comprising a leaf spring connected at respective ends to said first connecting elements (13, 32) and in an intermediate position with respect to said ends to said chassis (2) below said longitudinal elements (2', 2") along said vertical axis (C).

2. Vehicle according to claim 1, wherein said longitudinal elements have a C-shaped cross section comprising a vertical wall (2a) and a pair of upper and lower walls (2b, 2c) extending cantilevered from the end of said vertical wall (2a), said suspension system (10, 30) supporting said motor wheel (6) so that an axis of rotation (O) of said motor wheel (6) is placed above said lower wall (2c) .

3. Vehicle according to the preceding claims, wherein said first and second ends (13', 32', 13", 32") are connected to the respective elements via movable connections (14; 36, 15;35).

4. Vehicle according to claim 3, whose said movable connections (14; 36, 15; 35) comprise a ball joint and/or a hinge.

5. Vehicle according to one of claims 3 or 4, wherein said first and second arms (13a, 13b, 32a, 32b) are fork-shaped so that said external ends (13", 32") are connected to said steering knuckle (50) at a single point, said internal ends (13', 32') are connected to said chassis (2) at two distinct points spaced along said longitudinal axis (A).

6. Vehicle according to one of the preceding claims, wherein said suspension system (10) comprises suspension means (11) operatively interposed between said steering knuckle (50) and said chassis (2) above said first connecting element (13, 32) along said vertical axis (C).

7. Vehicle according to claim 6, wherein said suspension means (11) comprise a hydraulic cylinder (12).

8. Vehicle according to claim 6 or 7, wherein said chassis (2) comprises respective flanges (2d) extending above said longitudinal elements (2', 2"), said suspension means (11) being operationally interposed between an upper end (2d") of said flanges (2d) and said steering knuckle (50).

9. Vehicle according to one of the preceding claims, wherein said suspension system (30) comprises a second connecting element (31) comprising a first and a second arm (31a, 31b), said first and second arms (31a , 31b) being connected at respective first and second ends (31', 31") respectively to said chassis (2) and to said steering knuckle (50) above said first connecting element (32).

10. Vehicle according to claim 9, wherein said first and second ends (31', 31") are connected to the respective elements via movable connections (33, 34).

11. Vehicle according to claim 10, whose said movable connections (33, 34) comprise a ball joint and/or a hinge.

12. Vehicle according to one of claims 9 to 11, wherein said first and second arms (31a, 31b) are fork-shaped so that said external ends (31") are connected to said steering knuckle (50) in a single point, said internal ends (31') are connected to said chassis (2) in two distinct points spaced along said longitudinal axis (A).

13. Vehicle according to one of the previous claims, wherein said steering knuckle (50) defines an opening (52) to allow the passage of an operating shaft (61) of said electric machine (M), said motor wheel (6) comprising a transmission (62) operatively interposed between said operating shaft (61) and said rim of said motor wheel (6) configured to vary the torque/speed between said operating shaft (61) and said rim.

14. Vehicle according to claim 13, wherein said transmission (62) comprises an epicyclic gear train.

15. Vehicle according to claim 14 wherein said transmission (62) comprises a compound type epicyclic gear train.

16. Vehicle according to claim 14 or 15 wherein said transmission (62) comprises a first epicyclic gear train where the solar gear (63) is rigidly connected to said operating shaft and a second epicyclic gear train where the solar gear (63') is rigidly connected to the train carrier (67) of said first epicyclic gear train and where the train carrier (67') is rigidly connected to said rim.

17. Vehicle according to one of the preceding claims, wherein said vehicle comprises a pair of non-steering motor wheels (6) connected via a respective suspension system (70) to said chassis (2), said suspension system (70) comprising a bar (71) rigidly connecting the wheel hubs (53) of said motor wheels (6) to each other and an elastic device (72) connecting said bar (71) to said chassis (2).

18. Vehicle according to claim 17, wherein said elastic device (72) comprises a leaf spring (73) connected in an intermediate portion to said bar (71) and to the ends (73', 73") via respective connections (75, 76) to said longitudinal element (2', 2").
